Europäisches Patentamt

(19) European Patent Office

Office européen des brevets

(11) EP 0 463 611 B1

(12) EUROPEAN PATENT SPECIFICATION

(45) Date of publication and mention
of the grant of the patent:
**15.05.1996 Bulletin 1996/20**

(51) Int. Cl.⁶: **B29C 53/58**, B29C 53/80,
B29C 53/84
// B29K105/08, B29K71/00

(21) Application number: **91110514.6**

(22) Date of filing: **25.06.1991**

(54) **Apparatus and method for winding fiber reinforced thermoplastic resin tow and product thereof**

Vorrichtung und Verfahren zum Wickeln faserverstärkter thermoplastischer Harzfäden sowie
Verfahrensprodukt

Dispositif et procédé pour en rouler des filaments thermoplastiques renforcés par des fibres et produit
obtenu

(84) Designated Contracting States:
**AT BE CH DE ES FR GB GR IT LI LU NL SE**

(30) Priority: **25.06.1990 US 550104**

(43) Date of publication of application:
**02.01.1992 Bulletin 1992/01**

(73) Proprietor: **E.I. DU PONT DE NEMOURS AND
COMPANY
Wilmington Delaware 19898 (US)**

(72) Inventors:
• **Gruber, Mark Brian
Landenberg, Pennsylvania 19350 (US)**
• **Hanks, Jeffrey Alan
Milford, Delaware 19963 (US)**
• **Lamontia, Mark Alan
Landenberg, Pennsylvania 19350 (US)**
• **Yost, Bruce Allen
Newark, Delaware 19711 (US)**

(74) Representative: **Abitz, Walter, Dr.-Ing. et al
Patentanwälte Abitz & Partner
Postfach 86 01 09
D-81628 München (DE)**

(56) References cited:
EP-A- 0 265 915          DE-A- 3 109 365
FR-A- 1 359 169          US-A- 4 010 054
US-A- 4 990 213

• COMPOSITES MANUFACTURING vol. 2, no. 2,
1991, OXFORD, G.B. pages 97 - 104
ROYCHOWDHURI ET AL. 'An experimental
investigation of consolidation in thermoplastic
filament winding'
• PLASTVERARBEITER vol. 41, no. 5, 1990,
SPEYER, DE pages 18 - 25 BORN ET AL. 'Mit
Thermoplasten impr gnierte Fasern wickeln'
• COMPOSITES MANUFACTURING vol. 2, no. 2,
1991, pages 105 - 113 CIRINO ET AL. 'In-situ
consolidation for the thermoplastic composite
ring-residual stress rate'
• COMPOSITES vol. 26, no. 3, May 1986, PARIS,
FRANCE pages 121 - 128 TISNE 'Bobinage de
fibres continues imprégnées de résine
thermoplastique'

**Description**

Background

This invention relates to filament winding fiber-reinforced resin matrix products and, more particularly, it relates to winding fiber reinforced thermoplastic resin tow to form a large diameter insitu consolidated product.

Equipment for winding multiple length fiber reinforced thermoplastic resin tow on a mandrel is known. However, fabrication of large diameter parts in this manner is not sufficient to give complete consolidation because as the part diameter increases, the effect of tension to create normal force decreases during winding.

US-A-4,010,054 discloses a method cf. the preamble of claim 1 for winding fiber reinforced thermoplastic resin tows to form an insitu consolidated product cf. the preamble of claim 2. The tow is advanced under tension to a rotating mandrel, the tension creating a force on the tow as it is laid down on the mandrel. The tow is preheated prior to its reaching the mandrel and is guided in a helical path to form a plurality of plies. Additional force is applied to the tow at the location where it is laid down on the mandrel by a dual roller system. The rolls compact the incoming tow between them to assure uniformity of the strand thickness prior to winding. Similarly, the lower roll compacts the strand onto the mandrel or a layer of winding on the mandrel. In a further embodiment disclosed in that publication, the tow is passed over a heated shoe and then tangentially to the mandrel in an apparatus cf. the preamble of claim 7. The carrier for the heated shoe may be retracted or pushed back on a slide as wall thickness of the product being wound increases. In said publication, an apparatus for winding fiber reinforced thermoplastic resin tow is disclosed cf. the preamble of claim 7. EP-A-0 265 915 discloses a similar method wherein the tow is compacted against the mandrel by a heated shoe positioned at the location where the tow is laid down on the mandrel. By that prior art process, the void content in the resulting filament wound thermoplastic structure should be reduced.

Summary of the invention

The invention as claimed in claims 1, 2 and 7 solves the problem of how to design and manufacture wound cylindrical fiber reinforced thermoplastic resin products of particularly high strength.

According to the present invention, an insitu consolidated large diameter composite structure as claimed in claim 2 (i.e., the ability to consolidate the structure during winding of the structure without the need of consolidation processing after winding) is built from a plurality of lengths of thermoplastic resin impregnated yarns wound simultaneously on a mandrel cf. the method of claim 1 using the apparatus as claimed in claim 7. Multiple ends of such yarns are fed under controlled tension in the range of 5% to 50% of the ultimate tensile strength of the yarn from a supply source to a traversing carriage of a filament winder as a flat uniform tape. This tape then moves through the "head" portion of the filament winder containing a preheating section, a heated guide, and a contact point heating source before being laid down in a predetermined helical or geodesic path on a rotating mandrel to form a multi-ply product.

The head of the filament winder is mounted on the end of the carriage feed arm which can move in and out compensating for changes in cross-section of the rotating mandrel. Infra-red (IR) strip heaters are mounted on the head to preheat the multi-end impregnated yarn and are designed in length and intensity to bring the thermoplastic resin to within ±10°C of its melt or processing temperature. The pre-heated impregnated yarn then passes across a heated guide that is maintained at a temperature above the melt temperature but below the degradation temperature of the thermoplastic resin, and located as close as possible to the surface of the part being wound.

Mounted at the forward most portion of the head is a contact point heating source which maintains the surface temperature of the part high enough, through induced heating of the mandrel and direct heating of the wound surface, to ensure molten mating surfaces at the laydown point of the incoming lengths of impregnated yarn. Hot air, open flame, and IR contact point heating sources may be used. The selection of which source to use is dependent on the yarn, the thermoplastic resin, the mandrel design, and operating speed.

At the location where the tow is laid down on the mandrel and consolidted through the use of a mechanically applied force. The force is applied by the combination of a heated shoe and a chilled roller located down stream from the shoe.

Upon completion of the winding process all heat sources are removed and the part is allowed to cool. After reaching room temperature the part may easily be extracted from the mandrel and an insitu consolidated part with less than 5% void content requiring no post-consolidation steps results. The hoop and axial ply waviness of the part is less than one-half of a ply thickness.

Brief Description of the Drawings

Fig. 1 is a schematic side view of a winding apparatus for practicing the invention.

Fig. 2 is an enlarged schematic isometric view of one means for applying pressure to the mandrel.

Figs. 3 and 4 are schematic isometric views of a portion of the wound part showing axial and hoop direction, respectively.

Figs. 5 and 6 are enlarged photomicrographs showing hoop and axial ply direction waviness, respectively, of a product of this invention.

Detailed Description of the Illustrated Embodiments

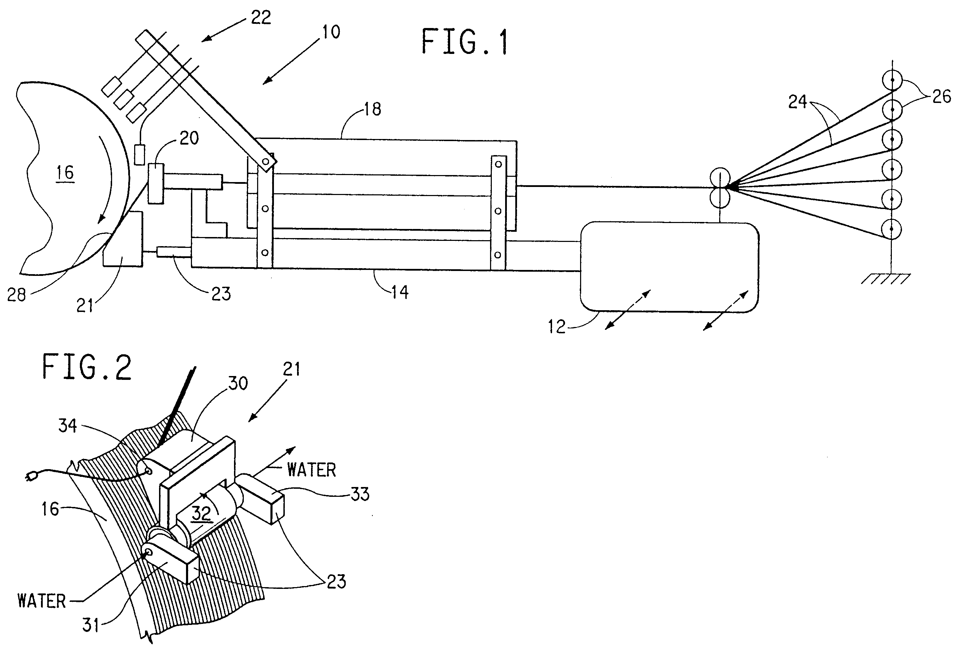

In Fig. 1 the yarn-laying head used in practicing the invention is generally designated by the numeral 10 and is shown to include a traversing carriage 12 upon which is mounted a feed arm 14 movable toward and away from a rotating mandrel 16. The traversing carriage, feed arm, and mandrel are a model W60-16 triple axis filament winder with a Compositrak® computer by McClean Anderson of Milwaukee, Wis. Mounted to the feed arm 14 are infrared heaters 18, a heated guide 20, an open flame heater 22, and a device 21,the surface of which is pushed against the tow being wound on the mandrel by an air cylinder 23 (Fig. 1).

As carriage 12 is traversed longitudinally of mandrel 16 a plurality of lengths of fiber reinforced thermoplastic resin tows 24 are pulled from a plurality of supply packages 26 mounted on rolling takeoff creels 25 against a desired level of back tension (in the range of 5% to 50% of the ultimate tensile strength of the tow) applied by a mechanism (not shown) associated with the creel for controlling unwind tension on packages 26 such as a tension compensator of the type known to those skilled in the art.

As the yarn-laying head moves with respect to the structure being wound on mandrel 16, the thermoplastic resin impregnated lengths of yarn 24 are exposed to radiant heaters 18. In these heaters, the thermoplastic resin is heated to a temperature that is within 10°C of its melt temperature. The lengths of tow then pass through a heated guide 20 which in the preferred embodiment is a circular eye wrapped with an electrically operated band heater which raises the temperature of the thermoplastic to a temperature above its melting point but below its degradation temperature which should be understood to be below the melting point of the reinforcing fibers. Mounted at the forward end of feed arm 14 is a propane torch open flame heater 22 over which the tows 24 pass to the laydown location 28 on the mandrel 16. This heater heats the surface of the part being wound on the mandrel, through induced heating of the mandrel and direct heating of lengths of yarn 24 as they travel from the guide 20 to location 28 to ensure molten mating surfaces at laydown location 28.

In one embodiment for applying additional force to the mandrel, shown in Fig. 2, the device 21 comprises a heated shoe 30 (i.e. a first surface) and a roller 32 (i.e. a second surface) mounted to pivot arms 31, 33 which in turn are joined to air cylinder 23 mounted to feed arm 14 (Fig. 1). Pivot arms 31, 33 also contain rotary unions to enable water to be circulated through roller 32 to cool the roller surface. The shoe is heated by a cartridge heater 34 embedded below the surface of the shoe.

Void Content

To determine void content in a composite sample, the density of the sample must be measured and the density of a zero void sample must be calculated. From these two numbers, the void content of the sample can be determined.

Measurement of sample density:

The density of the samples were measured using ASTM D 792-66 standard test method. The following procedures were followed:

1) Weigh sample in air (a)
2) Weigh sample in water (b)
3) Calculate the specific gravity (s.g.) of the sample  s.g. = a/(a-b)
4) Calculate the density of the sample Measured density = s.g. x density of water at the measurement temperature.

Theoretical density for a sample with no voids:

$$Dc = (Df \times Vf) + (Dm \times Vm)$$

where:

Dc  = density of the composite
Df  = density of the fiber
Dm  = density of the matrix
Vf  = fiber volume
Vm  = matrix volume

Calculate the % void content:

$$\% \text{ voids} = \frac{(\text{Theoretical density - measured density})}{\text{theoretical density}} \times 100$$

Hoop and Axial Waviness

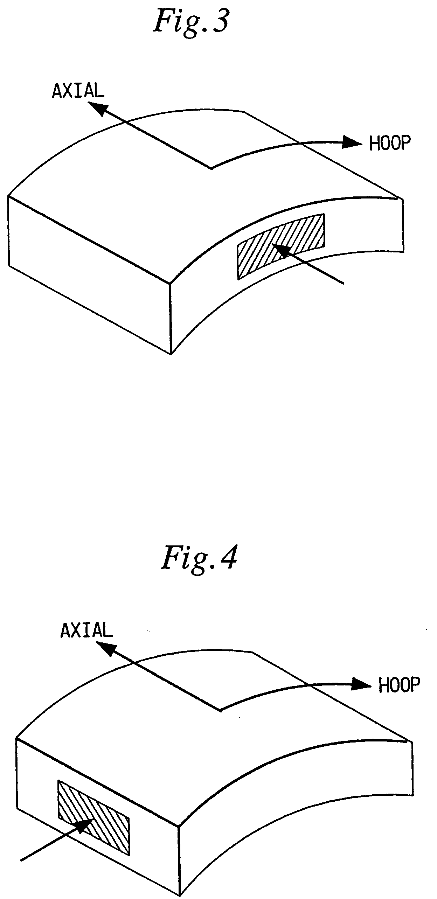

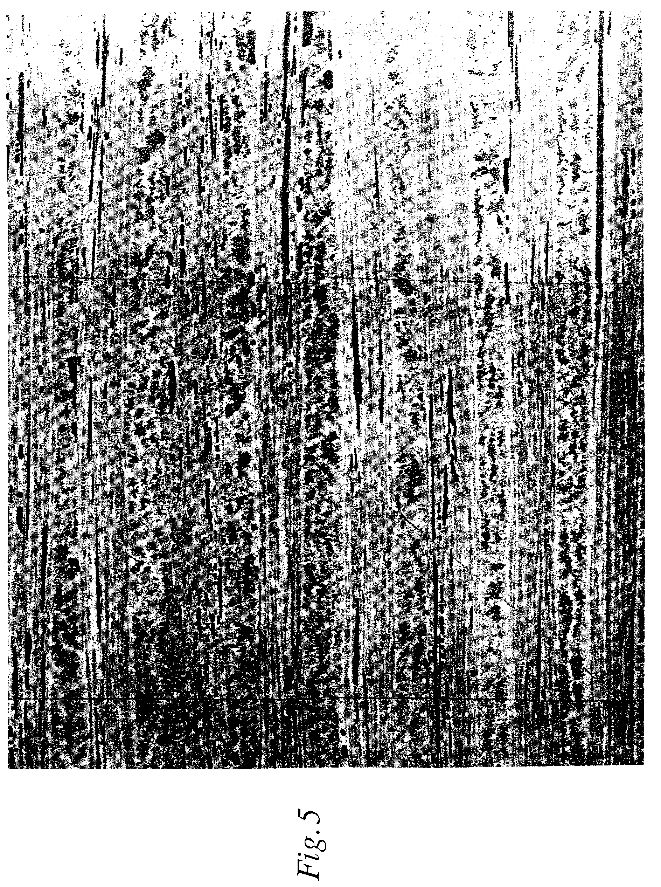

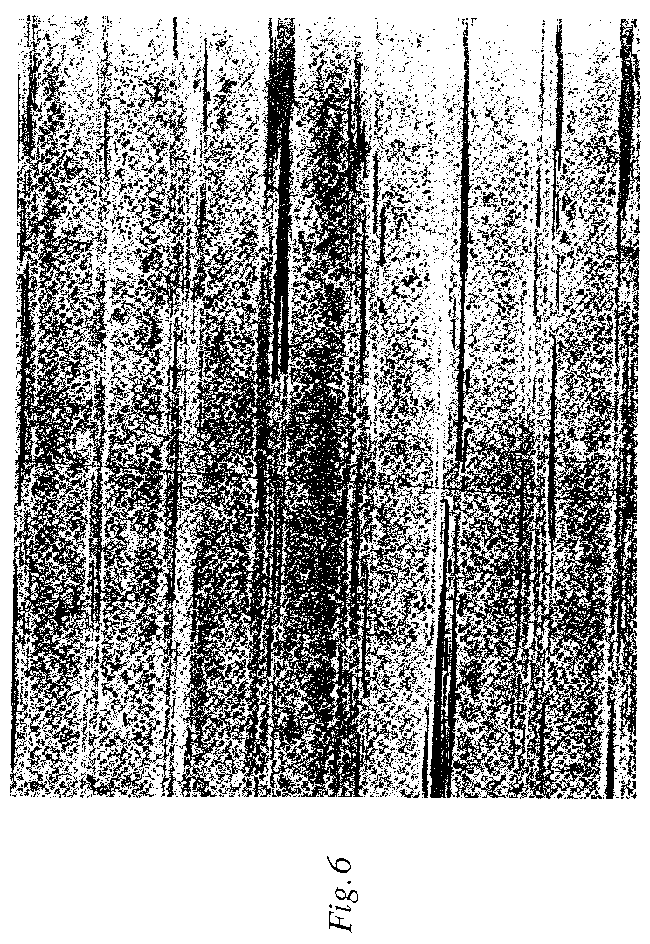

To determine hoop and axial waviness, a section is cut from a wound part as shown in Figs. 3 and 4. The section is potted in an epoxy resin and the surfaces to be viewed are polished. A photomicrograph as shown in Fig. 5 and 6 of the viewed surface is taken and ply waviness is measured by placing a ruler on the photomicrograph and measuring how much a ply moves from a straight line in the case of an axial ply 50 (Fig. 6) or from a uniform circular arc in the case of a hoop ply 52 (Fig. 5).

EXAMPLE

The following example was made according to the process shown in Fig. 1 wherein tow is fed from a creel to a traversing head, then to a rotating mandrel. The tow is heated to the melt temperature by means of infra-red heaters. It is then guided onto the mandrel using a heated eye guide. A force is applied to consolidate the tow at the location on the mandrel where the tow is laid down. The tow is carbon fiber reinforced polyetherketoneketone (PEKK) resin. The conditions for the example are listed below.

|  | Example |
|---|---|
| Part Number | T6253-117 |
| Number of Ends | 2 |
| Fiber Type | AS4 graphite |
| Fiber Size | 12 K |
| Resin Type | PEKK |
| Ply Thickness (cm(inches)) | 0.025 (0.01) |
| Tension (N(g)/end) | 44 (4500) |
| Winding Speed (m (ft.)/min.) | 13.7 (45) |
| Tow Temp. (°C) | 380 |
| Laydown Temp. (°C) | 360-380 |
| Roller Load (N(lbs.)) | 556 (125) |
| Hot Shoe Load | 556 (125) |
| Hot Shoe Temp. (°C) | 380 |
| The final part construction was: | |
| Part Diameter (cm (inches)) | 76.2 (30) |
| Part Thickness (mm (inches)) | 6.35 (0.25) |
| Fiber Orientation (degrees) | 90 |
| The parts were cut up and tested with the following results: | |
| Fiber Volume Content (%) | 56.3 |
| Void Content (%) | 0.2 |
| Fiber Waviness | |
| Ave. Waviness (mm (inches)) | |
| --Hoop Direction (Axial Plies) | None |
| --Axial Direction (Hoop Plies) | <0.05 (<0.002) |

**Claims**

1. Method for building and consolidating a plied composite structure from fiber reinforced thermoplastic resin tow that includes the steps of advancing tow (24) under tension to a rotating mandrel (16), said tension creating a force on the tow (24) as it is laid down on the mandrel (16); preheating said tow (24) prior to its reaching said mandrel (16); guiding said tow (24) in a helical path by means of a guide (12, 14) axially traversing said mandrel (16) to form a plurality of plies, and applying an additional force to the tow (24) at a location (28) where the tow (24) is laid down on the mandrel (16) by means of a surface pushed against the tow (24) at said location (28), characterized in that said surface pushed against the tow (24) comprises a combination of a heated shoe (30) and a chilled roller (32) located downstream of the heated shoe (30) so as to reduce hoop and axial ply waviness to less than one-half of a ply thickness.

2. An insitu consolidated fiber reinforced thermoplastic resin product wound from a plurality of fiber reinforced thermoplastic resin tows (24) and having a void content less than 5 percent characterized by said product having a diameter greater than 38 cm and an average hoop waviness and an average axial ply waviness of less than one-half of a ply thickness.

3. The product as defined in claim 2, said fiber being carbon, said resin being polyetheretherketone.

4. The product as defined in claim 2, said fiber being carbon, said resin being polyetherketoneketone.

5. The product as defined in claim 2, said fiber being glass, said resin being polyetherketoneketone.

6. The product as defined in claim 5 wherein said product is a ribbed structure.

7. An apparatus for winding fiber reinforced thermoplastic resin tow (24) on a rotating mandrel (16) that includes a source (26) of said tow (24), means for tensioning said tow, means (18) for preheating said tow (24) prior to reaching said mandrel (16), a carriage (12) having a guide (20) thereon for traversing the tow (24) back and forth on the mandrel (16) to wind a product formed of a plurality of plies and a roller (32) pushed against said mandrel (16) at a location (28) where the tow (24) is laid down on the mandrel (16) and in contact with said tow (24) characterized by
    the roller (32) being chilled and
    a heated shoe (30) pushed against said mandrel (16) at said location (28) upstream of said chilled roller (32) so as to reduce hoop and axial ply waviness to less than one-half of a ply thickness.

**Patentansprüche**

1. Verfahren zur Herstellung und Verfestigung einer aus Lagen bestehenden Verbundstruktur aus faserverstärktem und aus thermoplastischem Harz bestehendem Kabel mit den folgenden Schritten: Bewegen des Kabels (24) unter Spannung zu einem rotierenden Dorn (16), wobei die Spannung eine Kraft am Kabel (24) erzeugt, wenn dieses auf dem Dorn (16) abgelegt wird, Vorheizen des Kabels (24), bevor es den Dorn (16) erreicht, Führen des Kabels (24) auf einer schraubenförmigen Bahn mittels einer sich am Dorn (16) axial verschiebenden Führung (12, 14) zur Bildung einer Vielzahl von Lagen und Ausüben einer zusätzlichen Kraft auf das Kabel (24) an einem Ort (28), wo das Kabel (24) auf dem Dorn (16) abgelegt wird, mittels einer an diesem Ort (28) gegen das Kabel (24) gedrückten Fläche,
    dadurch **gekennzeichnet**,
    daß die gegen das Kabel (24) gedrückte Fläche eine Kombination aus einem beheizten Schuh (30) und einer in Bewegungsrichtung abwärts vom beheizten Schuh (30) angeordneten gekühlten Walze (32) enthält, um eine in Umfangsrichtung und axial auftretende Lagenwelligkeit auf weniger als die Hälfte einer Lagendicke zu verringern.

2. An Ort und Stelle verfestigtes, faserverstärktes und aus thermoplastischem Harz bestehendes Produkt, das aus einer Vielzahl von faserverstärkten und aus thermoplastischem Harz bestehenden Kabeln (24) gewickelt ist und einen Hohlraumgehalt von weniger als 5 % hat,
    dadurch **gekennzeichnet**,
    daß das Produkt einen Durchmesser von über 38 cm und eine durchschnittliche Umfangswelligkeit und eine durchschnittliche axiale Lagenwelligkeit von weniger als der Hälfte einer Lagendicke hat.

3. Produkt nach Anspruch 2, wobei die Faser aus Kohlenstoff und das Harz aus Polyetheretherketon bestehen.

4. Produkt nach Anspruch 2, wobei die Faser aus Kohlenstoff und das Harz aus Polyetherketonketon bestehen.

5. Produkt nach Anspruch 2, wobei die Faser aus Glas und das Harz aus Polyetherketonketon bestehen.

6. Produkt nach Anspruch 5, wobei das Produkt eine rippenförmige Struktur ist.

7. Vorrichtung zum Wickeln von faserverstärktem und aus thermoplastischem Harz bestehendem Kabel (24) auf einen rotierenden Dorn (16), die folgendes enthält: eine Quelle (26) für das Kabel (24), eine Einrichtung zum Spannen des Kabels, eine Einrichtung (18) zum Vorheizen des Kabels (24) vor dem Erreichen des Dorns (16), einen Schlitten (12) mit einer darauf angeordneten Führung (20) zum Vor- und Zurückbewegen des Kabels (24) auf dem Dorn (16) zum Wickeln eines aus einer Vielzahl von Lagen gebildeten Produkts und eine Walze (32), die gegen den Dorn (16) an einem Ort (28) gedrückt wird, wo das Kabel (24) auf dem Dorn (16) abgelegt wird, und die mit dem Kabel (24) in Berührung steht,
dadurch **gekennzeichnet**,
daß die Walze (32) gekühlt wird und
daß ein beheizter Schuh (30) in Bewegungsrichtung aufwärts von der gekühlten Walze (32) am genannten Ort (28) gegen den Dorn (16) gedrückt wird, um eine Umfangs- und eine axiale Lagenwelligkeit auf weniger als die Hälfte einer Lagendicke zu verringern.

## Revendications

1. Procédé de fabrication et de consolidation d'une structure composite stratifiée constituée de câble de résine thermoplastique renforcée de fibre qui comprend les opérations d'amenée d'un câble (24) sous tension à un mandrin rotatif (16), ladite tension créant une force sur le câble (24) au moment où il est déposé sur le mandrin (16), de préchauffage dudit câble (24) avant qu'il atteigne ledit mandrin (16), de guidage dudit câble (24) selon un trajet hélicoïdal à l'aide d'un guide (12,14) se déplaçant axialement le long dudit mandrin (16) pour former une pluralité de couches et d'application d'une force supplémentaire sur le câble (24), au point (28) où le câble (24) est déposé sur le mandrin (16), à l'aide d'une surface appliquée contre le câble (24) audit point (28), caractérisé en ce que ladite surface appliquée contre le câble (24) comprend une combinaison d'un patin chauffé (30) et d'un cylindre refroidi (32) disposé en aval du patin chauffé (30) de manière à ramener les ondulations des couches dans le sens circonférentiel et axial à moins de la moitié de l'épaisseur d'une couche.

2. Produit en résine thermoplastique renforcée de fibre consolidé in situ enroulé à partir d'une pluralité de câbles de résine thermoplastique renforcée de fibre (24) et présentant un volume de vide inférieur à 5%, caractérisé en ce que ledit produit présente un diamètre supérieur à 38 cm et une ondulation moyenne circonférentielle et une ondulation moyenne axiale des couches inférieures à la moitié de l'épaisseur des couches.

3. Le produit selon la revendication 2, ladite fibre étant en carbone, ladite résine étant une polyétheréthercétone.

4. Le produit selon la revendication 2, ladite fibre étant en carbone, ladite résine étant une polyéthercétonecétone.

5. Le produit selon la revendication 2, ladite fibre étant de verre, ladite résine étant une polyéthercétonecétone.

6. Le produit selon la revendication 5, dans lequel ledit produit est une structure nervurée.

7. Un appareillage pour l'enroulement de câble de résine thermoplastique renforcée de fibre (24) sur un mandrin rotatif (16) qui comprend une source (26) dudit câble (24), des moyens pour tendre ledit câble, des moyens de préchauffage (18) dudit câble (24) avant qu'il n'atteigne ledit mandrin (16), un chariot (12) comportant un guide (20) pour déplacer le câble (24) en aller et retour sur toute la largeur du mandrin (16) pour enrouler un produit formé d'une pluralité de couches et un cylindre (32) appliqué contre ledit mandrin (16) en un point (28) où le câble (24) est déposé sur le mandrin (16) et en contact avec ledit câble (24) caractérisé en ce que le cylindre (32) est refroidi et un patin chauffé (30) est appliqué contre ledit mandrin (16) en un point (28) situé en amont dudit cylindre refroidi (32) de manière à ramener les ondulations circonférentielles et axiales des couches en dessous de la moitié d'une épaisseur de couche.

FIG.1

FIG.2

EP 0 463 611 B1

## Fig.3

## Fig.4

*Fig. 5*

Fig. 6